# EUROPEAN PATENT APPLICATION

(11) **EP 0 870 970 A2**
(43) Date of publication of application: **14.10.1998**
(21) Application number: 97203835.0
(22) Date of filing: 06.12.1997
(51) Int. Cl.: F16L 47/00

(54) **Adapter for a quick-fit coupling for pipes**

(30) Priority: 11.04.1997 IT MI970260 U
(71) Applicant: F.I.P. Formatura Iniezione Polimeri S.p.A, 16015 Casella (Genoa) (IT)
(72) Inventor: Mazzacano, Corrado, 16148 Genova (IT); Bisio, Andrea, 16145 Genova (IT)
(74) Representative: De Nova, Roberto

(57) **Abstract**

An adapter (1, 101) for a quick-fit coupling for a pipe (3), especially a plastic pipe, in an irrigation or fertilizing irrigation or water transporting system, which adapter enables easy, secure and reliable connection of the coupling to an element of the system, comprises an adapter body (6, 106) that includes a seat (2, 102) for the pipe (3), and a metal insert (7, 107) that includes a thread (4, 104) for connecting it to the system element, the metal insert (7, 107) being made integral with the adapter body (6, 106) in the process of the manufacture of the adapter body (6, 106) by injection moulding of a plastic.

## Description

The present innovation relates to an adapter for a quick-fit coupling, for a pipe, especially a plastic pipe, in an irrigation or fertilizing irrigation or water transporting system, of the type that comprises a seat for receiving one end of the pipe and a thread for connecting the coupling to the system.

As is known, the adapter contains a thread by which the adapter body, and hence the whole of the quick-fit coupling, is screwed firmly to one of the elements of the system. It is also known that the dimensions of the thread are quite small, both in nominal diameter and in pitch. Because of this the screwing operation is somewhat uncertain and often performed inaccurately.

Besides this, general space requirements prevent the use of larger threads, for example strong trapezoidal threads, such as those used in the adapter to take the ring nut used in the coupling to grip the pipe in the seat.

It is an object of the present innovation to provide an adapter of the specified type having structural and functional characteristics such as to overcome the abovementioned problem.

This object is achieved in the form of an adapter of the specified type which is characterized in that it comprises a metal insert that includes said thread and is made integral with an adapter body that includes said seat, in the process of the manufacture of the adapter body by injection moulding of a plastic.

Further features and the advantages of the adaptor according to the present innovation will be seen in the following description of a preferred embodiment thereof. This description is given by way of non-restrictive indication and refers to the accompanying figures, in which:
- Figure 1 shows a view in cross-section of an adapter according to the innovation, and
- Figure 2 shows another example of an adapter according to the same innovation.

With reference to the accompanying figures, the number 1 is a general reference for an adapter according to the innovation, for a quick-fit coupling. The adapter 1 is intended for a quick-fit coupling in a system, e.g. an irrigation or fertilizing irrigation or water transporting system.

In particular the adapter 1 comprises a seat 2 for receiving one end of a pipe 3, in particular a plastic pipe, and a thread 4 for connecting the adapter to a system element having the general reference 5.

The adapter 1 includes an adapter body, marked 6, made of injection-moulded plastic, and is of essentially tubular cylindrical form with axis X-X.

The seat 2 is formed inside the adapter body 6, while on the outside of the adapter body is a robust external thread on which a ring nut (not shown in the figure) will be screwed to provide a leaktight grip on the end of the pipe inside the seat.

The adapter 1 includes a metal insert 7, which comprises the thread 4, and is made integral with the adapter body 6 in the process of the manufacture of the adapter body by injection moulding of a plastic.

The metal insert 7 comprises a first tubular portion 8 and a second tubular portion 9 continuing from the first tubular portion 8.

The first tubular portion 8 comprises the external thread 4 and projects beyond the adapter body 6.

The second tubular portion 9 is embedded in the adapter body 6 and has an outer skirt 10 and an inner skirt 11.

To ensure that the second tubular portion 9 of the insert 7 cannot be pulled out of the adapter body 6, a collar 12 projects from the outer skirt 10 of the insert, said collar being an isosceles trapezium, basically that is a dovetail, in cross-section, while an annular projection 13 projects from the inner skirt 11, said annular projection 13 being a right-angled trapezium, likewise basically a dovetail, in cross-section.

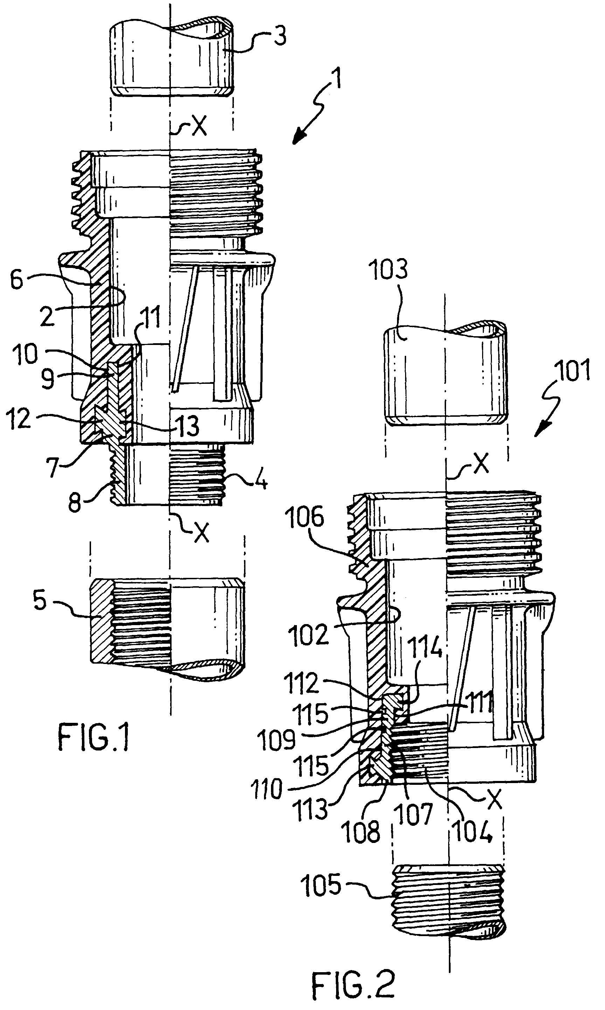

With reference to Figure 2, an adapter 101 will now be described in accordance with another embodiment of the same innovation.

The adapter 101 is intended for a quick-fit coupling in an irrigation or fertilizing irrigation or water transporting system.

In particular the adapter 101 comprises a seat 102 for receiving one end of a pipe 103, in particular a plastic pipe, and a thread 104 for connecting the adapter to a system element having the general reference 105.

The adapter 101 includes an adapter body, marked 106, made of a suitable injection-moulded plastic, and is of essentially tubular cylindrical form with axis X-X.

The seat 102 is formed inside the adapter body 6, while on the outside of the adapter body is a robust external thread on which a ring nut (not shown) will be screwed to provide a leaktight grip on the end of the pipe inside the seat.

The adapter 101 includes a metal insert 107, which comprises the thread 104, and is made integral with the adapter body 106 in the process of the manufacture of the adapter body by injection moulding of a plastic.

The metal insert 107 comprises a first tubular portion 108 and a second tubular portion 109 continuing from the first tubular portion 108.

Both the first tubular portion 108, which contains the internal thread 104 and comprises an outer skirt 110, and the second tubular portion 109, which comprises an inner skirt 111 and an outer skirt 112, are embedded in the adapter body 106.

To ensure that the insert cannot be pulled out of the adapter body, a collar 113 projects outwards from the outer skirt 110 and is an isosceles trapezium, basically that is a dovetail, in cross-section, while an annular projection 114 projects inwards from the inner skirt 111 at the free end of the second tubular portion 109, and is a right-angled trapezium, likewise basically a dovetail, in cross-section, and also two annular grooves 115 are formed on the outer skirt 112.

In operation the desired connection of the adapter to the system element is easily effected because of the great precision with which it is possible to make a thread on a metal mechanical component like the insert.

The principal advantage of the adapter according to the innovation is the ease with which it is now possible to connect the adapter with the system element.

Another advantage of the adapter according to the innovation is its strength, leaktightness and reliability.

Lastly, the adapter according to the innovation has also proved to be easy to produce, which is not the least advantage for an article that must be produced in large quantities.

Clearly, in order to satisfy local and specific needs, a person skilled in the art will be able to make many modifications to and variations of the adapter described above that are still within the scope and protection of the innovation as defined in the following claims.

## Claims

1. Adapter (1, 101) for a quick-fit coupling, for a pipe (3), especially a plastic pipe, in an irrigation or fertilizing irrigation or water transporting system, of the type that comprises a seat (2, 102) for receiving one end of the pipe (3) and a thread (4, 104) for connecting the coupling to the system, characterized in that it comprises a metal insert (7, 107) that includes said thread (4, 104) and is made integral with an adapter body (6, 106) that includes said seat (2, 102), in the process of the manufacture of the adapter body (6, 106) by injection moulding of a plastic.

2. Adapter (1) according to Claim 1, characterized in that the metal insert (7) comprises a first tubular portion (8) that projects from the adapter body (6) and includes the external thread (4), and, embedded in the adapter body (6), a second tubular portion (9) continuing from the first portion (8).

3. Adapter (1) according to Claim 2, characterized in that the second portion (9) comprises at least one collar (12).

4. Adapter (1) according to Claim 3, characterized in that the collar (12) is basically a dovetail in cross-section.

5. Adapter (101) according to Claim 1, characterized in that the metal insert (107) comprises, embedded in the adapter body (106), a first tubular portion (108) that includes the external thread (104).

6. Adapter (101) according to Claim 5, characterized in that the first tubular portion (108) comprises an outer collar (113).

7. Adapter (101) according to Claim 6, characterized in that said outer collar (113) is basically a dovetail in cross-section.

8. Adapter (101) according to Claim 5, characterized in that it comprises, embedded in the adapter body, a second tubular portion (109) continuing from the first portion (108).

9. Adapter (101) according to Claim 8, characterized in that said second tubular portion (109) comprises an annular projection (114).

10. Adapter (101) according to Claim 9, characterized in that said annular projection (114) is basically a dovetail in cross-section.

11. Adapter (101) according to Claim 8, characterized in that said second tubular portion (109) comprises external annual grooves (115).
